# EUROPÄISCHE PATENTSCHRIFT

(11) **EP 2 627 911 B1**
(45) Veröffentlichungstag und Bekanntmachung des Hinweises auf die Patenterteilung: **27.02.2019**
(21) Anmeldenummer: 11754661.4
(22) Anmeldetag: 08.09.2011
(51) Int. Cl.: F15B 13/08, F16K 27/00

(54) **VERFAHREN ZUM HERSTELLEN EINER HYDRAULISCHEN VORRICHTUNG**
METHOD FOR PRODUCING A HYDRAULIC DEVICE
PROCÉDÉ DE FABRICATION D'UN DISPOSITIF HYDRAULIQUE

(30) Priorität: 13.10.2010 DE 102010042400
(43) Veröffentlichungstag der Anmeldung: 21.08.2013
(73) Patentinhaber: Robert Bosch GmbH, 70442 Stuttgart (DE)
(72) Erfinder: KRASTEV, Ianislav, 71638 Ludwigsburg (DE); SCHNEIDER, Helmut, 72631 Aichtal (DE); STRAUSS, Steffen, 70839 Gerlingen (DE)
(86) Internationale Anmeldenummer: PCT/EP2011/065547
(87) Internationale Veröffentlichungsnummer: WO 2012/048963

(56) Entgegenhaltungen:
- DE-A1-102008 012 691
- DE-A1-102008 012 692
- US-A- 2 882 588
- US-A1- 2001 006 019

## Beschreibung

### Stand der Technik

Die Erfindung betrifft ein Verfahren nach dem Oberbegriff des Anspruchs 1, sowie ein Ventilmodul und ein Hydraulikmodul nach den nebengeordneten Patentansprüchen.

Zur Steuerung von Getrieben, insbesondere von Automatik-Getrieben in Kraftfahrzeugen, werden hydraulische Steuerungen verwendet, die eine Vielzahl von Elementen, wie Ventilen oder hydraulischen Kanälen, umfassen. Vom Markt her bekannt sind hydraulische Steuerungen, die beispielsweise Baugruppen wie etwa eine Ventilplatte mit hydraulischen Kanälen, ein Zwischenblech und ein Ventilgehäuse mit einer Anzahl von Ventilen umfassen. Dabei weisen die Ventilplatte, das Zwischenblech und das Ventilgehäuse jeweils eine im Wesentlichen flache Grundform auf, so dass diese übereinander geschichtet montiert und dann stabil miteinander - beispielsweise - verschraubt werden können. Das Zwischenblech kann Bohrungen aufweisen, durch welche eine hydraulische Verbindung zwischen der Ventilplatte und dem Ventilgehäuse in einer jeweils spezifischen Weise ermöglicht wird.

Für moderne Automatik-Getriebe - beispielsweise solche mit einer Start-Stopp-Funktion - werden häufig so genannte hydraulische Speicher verwendet, die gegebenenfalls am Getriebe angeordnet sind. Ein von einem Getriebe-Steuergerät elektrisch betätigbares hydraulisches Ventil ("Volumenstromsteuerungs-Einrichtung") steuert den Zugang zu dem hydraulischen Speicher, so dass ein kontrollierter Austausch von Fluid zwischen dem Speicher und dem Hydraulikkreis des Getriebes ermöglicht wird.

Das hydraulische Ventil ist beispielsweise aus einem Kunststoff-Spritzguss hergestellt. Es kann unter anderem einen Elektromagneten mit Anker, eine Ventilkugel, eine Ventilfeder, ein Rückschlagventil mit Bypass sowie eine Anzahl weiterer Elemente umfassen.
Das hydraulische Ventil ist häufig als diskretes Element ausgeführt, welches über hydraulische Kanäle mit dem hydraulischen Speicher einerseits und dem übrigen hydraulischen System andererseits verbunden ist. Dazu muss das hydraulische Ventil eine entsprechende Dichtigkeit für das unter Druck stehende Fluid aufweisen.

DE 10 2008 012 691 A1 beschreibt einen hydraulischen Steuerblock, der zwei tiefgezogene Blechabdeckungen aufweist. DE 10 2008 012 692 A1 beschreibt eine Magnetventilbaugruppe mit einem Magnetgehäuse aus zwei tiefgezogenen Blechstreifen und einem Ventilblock, der an einer beispielsweise gestemmten Verbindungsstelle mit den Blechstreifen verbunden ist. US 2001/0006019 A1 betrifft eein Steuerventiol, dessen Gehäuse aus einem Sandwich einer Vielzahl ebener Blechplatten aufgebaut ist.

### Offenbarung der Erfindung

Das der Erfindung zugrunde liegende Problem wird durch ein Verfahren nach Anspruch 1 sowie durch ein Ventilmodul und ein Hydraulikmodul nach den nebengeordneten Ansprüchen gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.
Das erfindungsgemäße Verfahren hat den Vorteil, dass eine hydraulische Vorrichtung, wie etwa ein Hydraulikmodul oder ein Ventilmodul, vergleichsweise billig, schnell und einfach hergestellt werden kann, wobei der Materialeinsatz gesenkt werden kann und Elemente eines Hydrauliksystems auf einfache Weise mit integriert werden können. Außerdem können Toleranzanforderungen minimiert werden, der Aufwand bei der Endmontage der hydraulischen Vorrichtung gesenkt werden, und der Umfang einer spanenden Nachbearbeitung vermindert werden. Weiterhin ermöglicht das Verfahren eine Schalenbauweise der hydraulischen Vorrichtung, wobei auch Hinterschnitte in Bohrungen, wie etwa radial umlaufende Nuten zur Ölversorgung von Ventilen, einfach realisiert werden können.
Mit dem erfindungsgemäßen Verfahren kann eine hydraulische Vorrichtung mittels einer im Wesentlichen nicht-spanenden Umformung hergestellt werden. Dabei werden mindestens zwei Bleche mittels der Prozesse Kaltumformung, Tiefziehen, Stanzen, Stanznieten, und/oder Durchsetzfügen in einem oder in mehreren Schritten zuerst geformt und danach in mindestens einem weiteren Schritt miteinander verbunden. Dies gelingt besonders gut, wenn die Bleche jeweils zu einer Art Schale ausgeformt werden, so dass wenigstens bereichsweise Hohlräume entstehen, welche beispielsweise hydraulische Kanäle bilden oder zur Aufnahme von verschiedenen Elementen verwendet werden können. Übrige Bereiche der Bleche können dabei unverformt bleiben, so dass zusammen mit einer entsprechenden Formgebung auf dem jeweils gegenüber liegenden Blech hydraulisch dichte Abschnitte gebildet werden können. Der Begriff "Durchsetzfügen" beschreibt ein erfindungsgemäßes Verfahren, um Bleche miteinander zu verbinden, wobei ein "Fügen" mittels Umformen durchgeführt wird. Für "Durchsetzfügen" werden in zumindest ähnlicher Bedeutung auch die Begriffe "Druckfügen", "Clinchen" oder "Toxen" verwendet. Ferner ist es denkbar, die Bleche mindestens bereichsweise auch mittels Punktschweißen oder Laserschweißen zu verbinden.
Aufgabe des Zwischenblechs kann es sein, eine genügende hydraulische Dichtheit der zu verbindenden Bleche zu erreichen. Das Zwischenblech kann durch Kaltumformen, Tiefziehen, Stanzen, Stanznieten, und/oder Durchsetzfügen geformt werden. Dabei können mit dem Zwischenblech zusätzlich auch die beschriebenen dreidimensionalen Strukturen hergestellt werden.

Eine mit dem erfindungsgemäßen Verfahren hergestellte erfindungsgemäße hydraulische Vorrichtung entsteht als solche erst durch die Verbindung der mindestens zwei Bleche, welche nach der Verbindung zusammen mit dem Zwischenblech eine sandwichartige Einheit bilden, wobei das Verfahren den Schritt umfasst: Verbinden der beiden Halbschalen und gleichzeitiges Herstellen von mindestens bereichsweisen hydraulischen Dichtabschnitten mittels Stanznieten und/oder Durchsetzfügen. Darüber hinaus ist es auch möglich, mehrere Zwischenbleche vorzusehen, so dass gegebenenfalls sehr vielgestaltige und sogar dreidimensionale Strukturen vergleichsweise einfach erzeugt werden können. Vorzugsweise werden in der hydraulischen Vorrichtung vorgesehene Hohlräume im Wesentlichen als symmetrische Hälften gebildet, also beispielsweise als in der Längsachse geschnittene halbe Zylinder. Mittels der beschriebenen Prozesse kann die Herstellung der erfindungsgemäßen hydraulischen Vorrichtung allgemein sehr vielgestaltig und differenziert erfolgen.
Als Ausgangsmaterial für das erfindungsgemäße Verfahren können handelsübliche Blech-Halbzeuge verwendet werden, wie etwa "Alu-Coil" und dergleichen. Dabei können zusätzlich Kosten gespart werden.
Eine erste Anwendung der Erfindung sieht vor, dass die hydraulische Vorrichtung ein Hydraulikmodul eines Getriebes ist. Damit kann eine gegebenenfalls sehr umfangreiche hydraulische Einheit kostengünstig hergestellt werden, wie sie etwa bei einem Automatikgetriebe eines Kraftfahrzeugs verwendet werden kann. Beispielsweise können in dem Hydraulikmodul zahlreiche Hydraulikkanäle gebildet werden oder hydraulische Anschlüsse geformt bzw. eingebunden werden.
Eine zweite Anwendung der Erfindung sieht vor, dass die hydraulische Vorrichtung ein Ventilmodul, insbesondere zum Füllen und Entleeren eines Hydraulikspeichers ist. Damit kann das erfindungsgemäße Verfahren auch zur Herstellung vergleichsweise kleiner Einheiten bzw. Elemente vorteilhaft angewendet werden. Dadurch können sonstige Herstellverfahren, wie beispielsweise Spritzgießen oder Fräsen ersetzt werden, und somit Kosten gespart werden.
Das Verfahren ist besonders leistungsfähig, wenn mindestens zwei der beschriebenen Prozesse im selben Arbeitsgang, also im Wesentlichen gleichzeitig, durchgeführt werden, insbesondere Stanzen, Stanznieten und ein Umformvorgang. Damit kann die Anzahl erforderlicher Bearbeitungsschritte wesentlich gesenkt werden. Dabei ist die erfindungsgemäße gleichzeitige Anwendung der Prozesse sowohl bei der separaten Herstellung der halbschalenartig geformten Bleche, als auch bei deren Verbindung, also der Endmontage möglich. Beispielsweise können durch Stanznieten die Halbschalen dauerhaft und hydraulisch dicht verbunden werden, während zugleich ein Umriss des Hydraulikmoduls präzise gestanzt wird, und gegebenenfalls weitere Kaltumformungen durchgeführt werden.
Die Erfindung ist besonders nützlich, wenn mindestens ein Bauelement und/oder mindestens eine hydraulische Baugruppe in die hydraulische Vorrichtung vor dem Umformen integriert wird. Insbesondere wird vorgeschlagen, dass das Verfahren mindestens einen der folgenden Schritte umfasst:
- Umformen eines ersten Blechs zu einer Halbschale;
- Umformen eines zweiten Blechs zu einer Halbschale;
- Einlegen mindestens eines Bauelements und/oder mindestens einer hydraulischen Baugruppe in mindestens eine der Halbschalen;
- Einlegen der mindestens einen Zwischenplatte;
- Verbinden der beiden Halbschalen und gleichzeitiges Herstellen von mindestens bereichsweisen hydraulischen Dichtabschnitten mittels Löten, Schweißen und/oder Kleben zusätzlich zum Stanznieten und/oder Durchsetzfügen.

Dabei können schrittweise die verschiedenen Bleche geformt und/oder gestanzt werden. Danach können Bauelemente und/oder hydraulische Baugruppen in zuvor geformte "halbrunde" Hohlräume eingelegt oder eingepresst werden. In einem weiteren Schritt werden die Bleche zusammen mit den eingelegten und/oder eingepressten Elementen dauerhaft verbunden. Insbesondere das erfindungsgemäß herzustellende Ventilmodul kann dank des selben Herstellverfahrens als ein integraler Bestandteil des Hydraulikmoduls erzeugt werden. Dabei ist es gegebenenfalls möglich, die Anforderungen an die Dichtheit des Ventilmoduls zu verringern. Weiterhin ist es denkbar, das Ventilmodul bzw. das Hydraulikmodul sogar in das Getriebe des Kraftfahrzeugs zu integrieren, wobei gegebenenfalls keine hydraulischen Schnittstellen der hydraulischen Vorrichtung nach außen wirksam sind.
Damit werden wesentliche Schritte beschrieben, die erfindungsgemäß zur Herstellung der hydraulische Vorrichtung, also beispielsweise des Hydraulikmoduls oder des Ventilmoduls anwendbar sind. Es versteht sich, dass die Aufzählung nur beispielhaft ist, und die Schritte nahezu beliebig wiederholt, in ihrer Reihenfolge geändert, ergänzt und/oder kombiniert oder mindestens zum Teil gleichzeitig durchgeführt werden können. Gegebenenfalls kann die Dichtheit der fertigen hydraulischen Vorrichtung weiter verbessert werden, wenn ergänzend zu den mechanischen Verfahren die Dichtabschnitte sowohl im Innern der hydraulischen Vorrichtung, als auch an deren Randabschnitten mittels eines Flachdichtmittels, beispielsweise einer Folie, oder mittels Kleben hergestellt werden. Damit kann es möglich sein, die Bleche der hydraulischen Vorrichtung ohne Schrauben oder Nieten dauerhaft zu verbinden.

Ergänzend wird vorgeschlagen, dass das eingelegte Bauelement und/oder die eingelegte hydraulische Baugruppe ein Übermaß in Bezug auf eine Ausformung der Halbschalen aufweist, in welche das Bauelement bzw. die hydraulische Baugruppe eingelegt wird. Bei vorgegebenen Maßen des Bauelements bzw. der hydraulischen Baugruppe werden die Ausformungen mit einem entsprechenden Untermaß dimensioniert. Damit können Leckagen des Fluids verkleinert oder sogar verhindert werden,

Eine Ausgestaltung des Verfahrens sieht vor, dass die Bleche als "Coil" ausgeführte Halbzeuge sind. Unter "Coil" wird ein aufgewickeltes Metallband als Rohprodukt verstanden, welches vorzugsweise aus einer Stahllegierung oder einer Aluminiumlegierung besteht. Damit können handelsübliche und besonders preisgünstige Roh-Materialformen vorteilhaft zur Herstellung der hydraulischen Vorrichtung verwendet werden. Insbesondere kann auch eine Serienfertigung der hydraulischen Vorrichtung vereinfacht und verbilligt werden.

Weiterhin wird ein Hydraulikmodul für die hydraulische Steuerung eines Getriebes vorgeschlagen, wobei das Hydraulikmodul mittels des erfindungsgemäßen Verfahrens hergestellt ist. Beispielsweise ist das Getriebe ein Automatik-Getriebe, eine Stufenautomat oder ein Doppelkupplungsgetriebe. Das Hydraulikmodul kann dadurch vergleichsweise einfach, kostengünstig und gegebenenfalls mit einer kleineren Stoffmenge hergestellt werden.

Ebenso wird ein Ventilmodul zum Füllen und Entleeren eines Hydraulikspeichers vorgeschlagen, wobei das Ventilmodul mittels des erfindungsgemäßen Verfahrens hergestellt ist. Beispielsweise ergänzt der Hydraulikspeicher den Hydraulikkreis eines Automatik-Getriebes, welches für eine so genannte "Start/Stopp"-Funktion eines Kraftfahrzeugs ausgelegt ist. In einer ersten Ausgestaltung wird das Ventilmodul als separates Element erfindungsgemäß hergestellt. In einer zweiten Ausgestaltung wird das Ventilmodul als integraler Bestandteil zusammen mit dem Hydraulikmodul hergestellt, woraus sich der zusätzliche Vorteil ergeben kann, dass das Ventilmodul gegebenenfalls kleine Leckagen aufweisen darf.

Nachfolgend werden beispielhafte Ausführungsformen der Erfindung unter Bezugnahme auf die Zeichnung erläutert. In der Zeichnung zeigen:
- Figur 1: ein Schema eines Ventilmoduls in einem Hydrauliksystem eines Getriebes;
- Figur 2: drei verschiedene Integrationsstufen des Ventilmoduls von Figur 1;
- Figur 3: eine Abfolge von Verfahrensschritten für die Herstellung einer ersten Halbschale einer hydraulischen Vorrichtung;
- Figur 4: eine Abfolge von Verfahrensschritten für die Herstellung einer zweiten Halbschale der hydraulischen Vorrichtung;
- Figur 5: eine Montage der ersten und der zweiten Halbschale nach den Figuren 3 und 4;
- Figur 6: das dauerhafte Verbinden der nach der Figur 5 montierten ersten und zweiten Halbschale.
- Figur 7: eine Schnittansicht des Ventilmoduls;
- Figur 8: eine Schnittansicht entlang einer Linie VIII-VIII der Figur 7;
- Figur 9: eine Schnittansicht entlang einer Linie IX-IX der Figur 7; und
- Figur 10: eine Ausführungsform der hydraulischen Vorrichtung unter Verwendung einer Zwischenplatte.
Es werden für funktionsäquivalente Elemente und Größen in allen Figuren auch bei unterschiedlichen Ausführungsformen die gleichen Bezugszeichen verwendet.

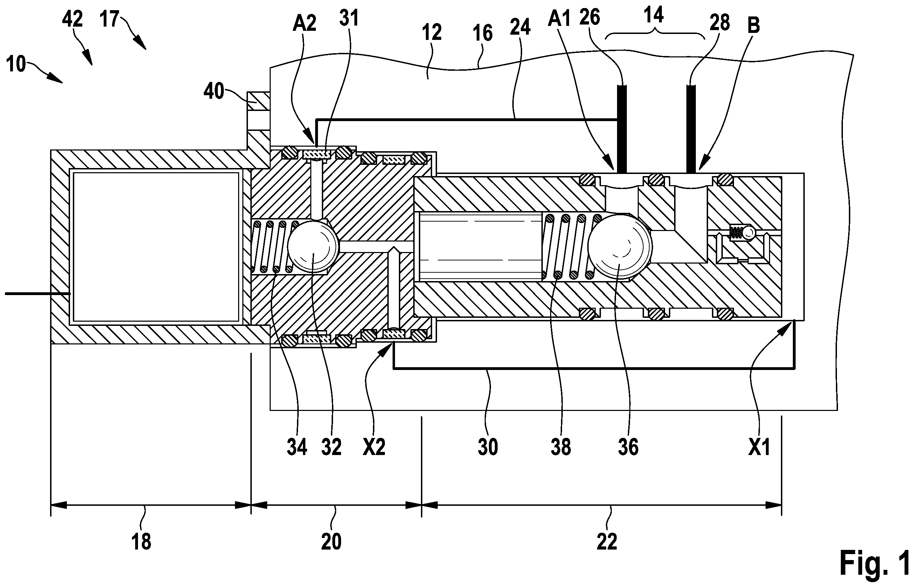

Figur 1 zeigt ein Ventilmodul 10 zusammen mit einem Hydraulikmodul 12, eingebunden in ein Hydrauliksystem 14 eines nicht dargestellten Automatik-Getriebes eines Kraftfahrzeugs. Das Hydraulikmodul 12 ist in der Zeichnung der Figur 1 schematisch durch eine Umrisslinie 16 dargestellt. Das Ventilmodul 10 bzw. das Hydraulikmodul 12 bzw. die Gesamtheit des Ventilmoduls 10 und des Hydraulikmoduls 12 bilden jeweils eine hydraulische Vorrichtung 17. Das Ventilmodul 10 ist vorliegend in drei Abschnitte gegliedert. Es umfasst einen Magnetkreis 18, eine Vorsteuerstufe 20, und eine Hauptstufe 22, wie es in der Zeichnung der Figur 1 von links nach rechts mittels Pfeilen bezeichnet ist.

Eine Hydraulikleitung 24 verbindet einen Anschluss A2 der Vorsteuerstufe 20 mit einem Anschluss A1 der Hauptstufe 22, und eine Hydraulikleitung 26 verbindet weiter den Anschluss A1 mit dem in der Figur 1 nicht näher erläuterten Hydrauliksystem 14. Ebenso verbindet eine Hydraulikleitung 28 einen Anschluss B der Hauptstufe 22 mit dem Hydrauliksystem 14. Eine weitere Hydraulikleitung 30 verbindet einen Anschluss X1 der Hauptstufe 22 mit einem Anschluss X2 der Vorsteuerstufe 20. Weiterhin ist an dem Anschluss A2 der Vorsteuerstufe 20 ein hydraulisches Filter 31 angeordnet.

Die Vorsteuerstufe 20 umfasst eine Ventilkugel 32 und eine Feder 34, und auch die Hauptstufe 22 umfasst eine Ventilkugel 36 und eine Feder 38. Deren Funktionen werden hier nicht näher erläutert. Der Magnetkreis 18 ist durch einen Flansch 40 an das Hydraulikmodul 12 angeschraubt. Insgesamt bilden der Magnetkreis 18, die Vorsteuerstufe 20, und die Hauptstufe 22 auch eine hydraulische Baugruppe 42 des Hydraulikmoduls 12.

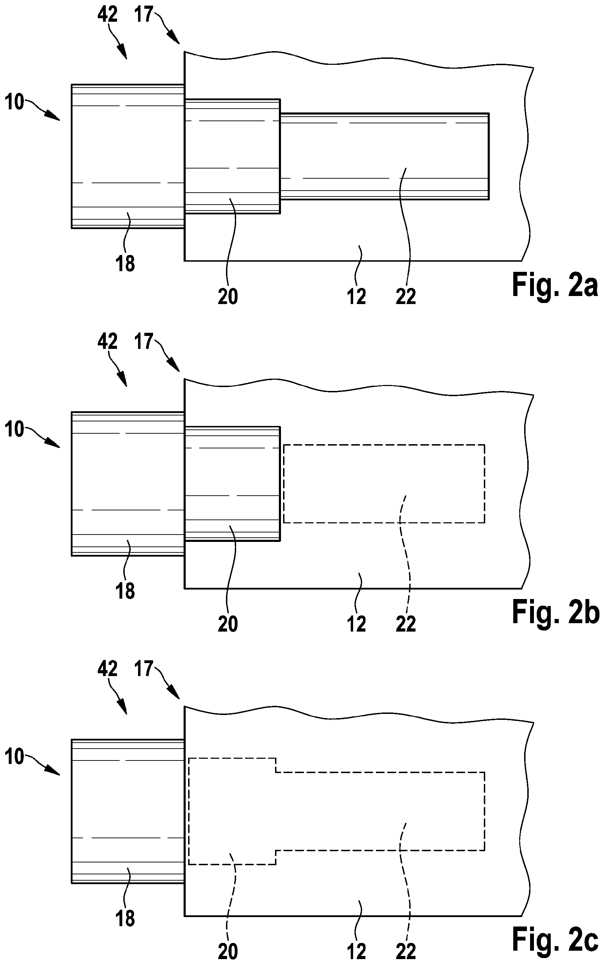

Die Figur 2 zeigt schematisch drei Varianten 2a, 2b und 2c einer möglichen Integration des Ventilmoduls 10 bzw. der hydraulischen Baugruppe 42 in das Hydraulikmodul 12. Die Darstellung der Figur 2 bezieht sich im Wesentlichen auf die Darstellung der Figur 1, wobei der Übersichtlichkeit halber die in der Figur 1 gezeigten Details nicht mit gezeichnet sind.

In Figur 2a ist das Ventilmodul 10 als bauliche Einheit ausgeführt, welche mit dem Hydraulikmodul 12 in einem gemeinsamen Gehäuse verbaut, also zusammengefasst ist. In Figur 2b ist die Hauptstufe 22 bereits ein integraler Bestandteil des Hydraulikmoduls 12. In Figur 2c ist zusätzlich zu der Hauptstufe 22 auch die Vorsteuerstufe 20 in das Hydraulikmodul 12 integriert, so dass nur der Magnetkreis 18 als separates Element ausgeführt ist.

Man erkennt, wie flexibel das Verfahren zum Herstellen der hydraulischen Vorrichtung 17 angewendet werden kann. Dadurch, dass das Ventilmodul 10 einerseits und das Hydraulikmodul 12 andererseits jeweils zumindest teilweise mittels vergleichbarer Verfahrensschritte hergestellt werden können, lässt sich das Ventilmodul 10 auch teilweise oder sogar ganz als integraler Bestandteil des Hydraulikmoduls 12 ausführen, wie nachfolgend im Detail erläutert werden wird.

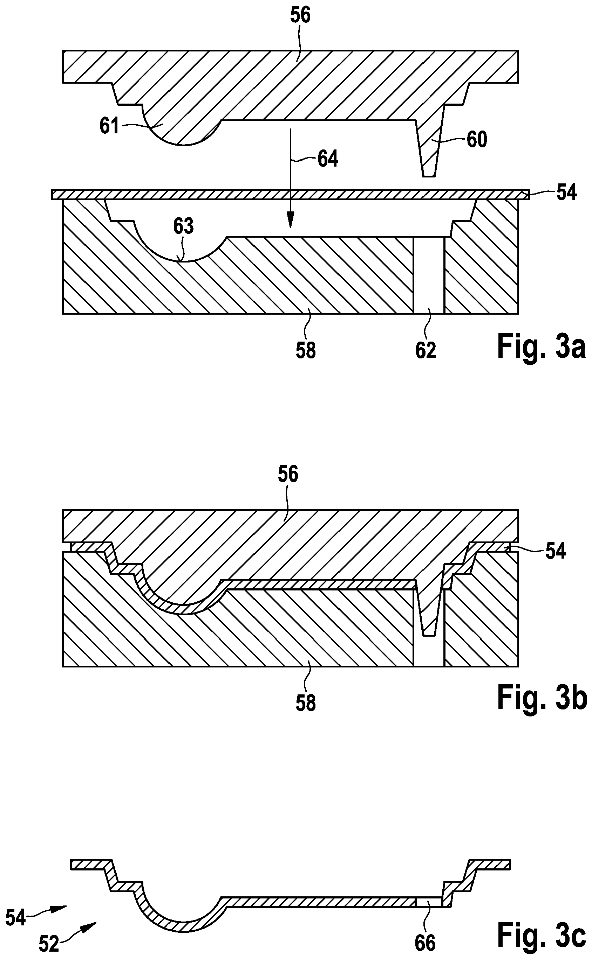

Figur 3 zeigt schematisch in Schritten 3a, 3b und 3c eine erste Abfolge von Verfahrensschritten zum Herstellen einer ersten Halbschale 52 der hydraulischen Vorrichtung 17. Die Darstellung der Figur 3 ist verallgemeinert und schematisch und zeigt die hydraulische Vorrichtung 17 nur beispielhaft als kleinen Ausschnitt in einer Schnittdarstellung.

In einem Schritt 3a ist ein ebenes Blech 54 in einer nicht gezeigten Presse zwischen einem in der Zeichnung oberen Werkzeug 56 und einem in der Zeichnung unteren Werkzeug 58 eingelegt. Das obere Werkzeug 56 weist unter anderem einen (Stanz-)Stempel 60 und eine konvexe Ausformung 61 auf, und entsprechend weist das untere Werkzeug 58 unter anderem eine Ausnehmung 62 und eine konkave Ausformung 63 auf. Ein Pfeil 64 bezeichnet eine Bewegung des oberen Werkzeugs 56 in Richtung auf das Blech 54 bzw. das untere Werkzeug 58. Beide Werkzeuge 56 und 58 sind in Bezug auf ihre Funktion passend bzw. komplementär zueinander ausgebildet.

In einem Schritt 3b ist nach erfolgter Bewegung eine Endstellung des oberen Werkzeugs 56 bzw. des unteren Werkzeugs 58 dargestellt. Das eingelegte Blech 54 ist entsprechend verformt und weist jetzt eine dreidimensionale Geometrie auf.

Ein Schritt 3c zeigt die mittels der Schritte 3a und 3b hergestellte erste Halbschale 52, wie sie nach dem Ende der Bewegung aus der Presse entnommen werden kann. Die Kontur der ersten Halbschale 52 entspricht im Wesentlichen den Konturen der Werkzeuge 56 und 58. Die erste Halbschale 52 weist jetzt unter anderem eine Öffnung 66 auf.

Das Blech 54 wurde vorliegend als "Alu-Coil"-Blech-Halbzeug in die Presse eingelegt. Man erkennt, wie durch eine Kaltumformung des Blechs 54 und einen gleichzeitig erfolgenden Stanzvorgang mittels weniger Bearbeitungsschritte eine gewünschte Ausführung der ersten Halbschale 52 hergestellt werden kann.

Ebenfalls können eine Anzahl weiterer Herstellschritte zusammen mit den in den Schritten 3a bis 3c gezeigten Verfahrensschritten erfolgen. Beispielsweise kann ein Rand des Blechs 54 vorteilhaft mit gestanzt werden. Die Genauigkeit kann dabei so hoch sein, dass eine spätere Nachbearbeitung gering ist oder sogar entfallen kann. Dies ist in der Figur 3 jedoch nicht gezeigt.

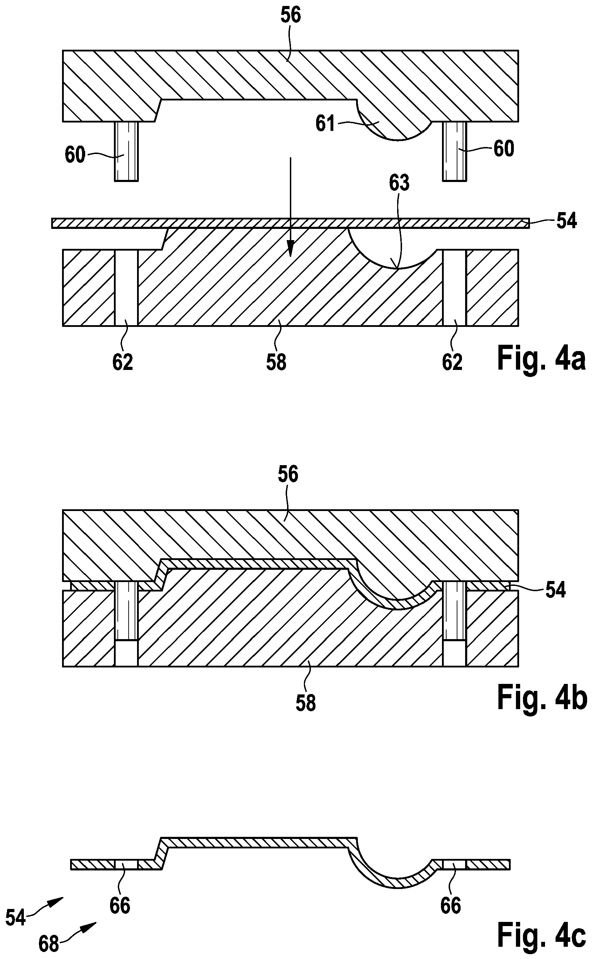

Figur 4 zeigt vergleichbar zu der Figur 3 schematisch in Schritten 4a, 4b und 4c das Herstellen einer zweiten Halbschale 68 der hydraulischen Vorrichtung 17. Die zweite Halbschale 68 weist eine im Vergleich zu der ersten Halbschale 52 verschiedene Form auf. Die Verfahrensschritte sind ähnlich oder sogar gleich zu der Figur 3, so dass diese hier nicht weiter erläutert werden.

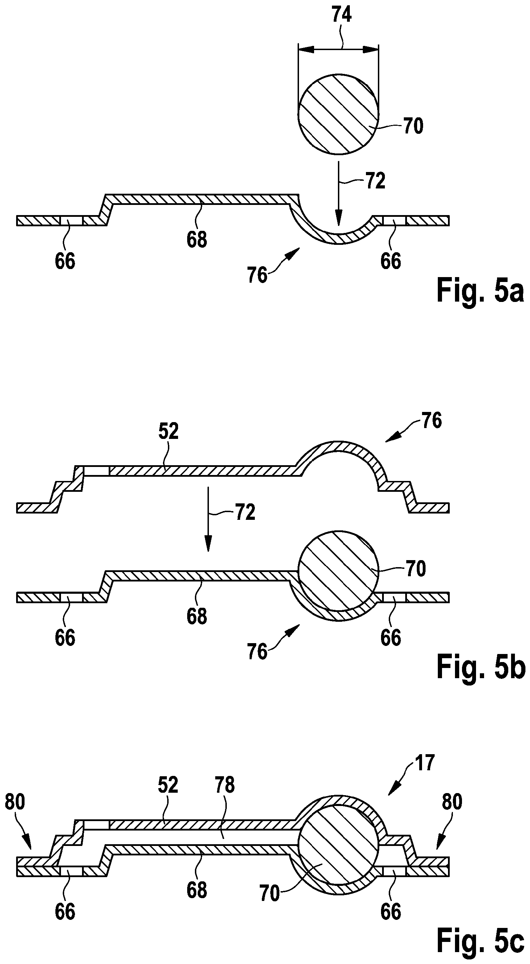

Figur 5 zeigt eine Montage der ersten Halbschale 52 und der zweiten Halbschale 68 zum Herstellen der hydraulischen Vorrichtung 17 in einer schematischen und vereinfachten Darstellung. In einem Schritt 5a wird die nach der Figur 4 hergestellte zweite Halbschale 68 in einer Presse positioniert, und in die zweite Halbschale 68 wird ein vormontiertes Bauelement 70 eingelegt. Ein Pfeil 72 zeigt die Montage-Richtung.

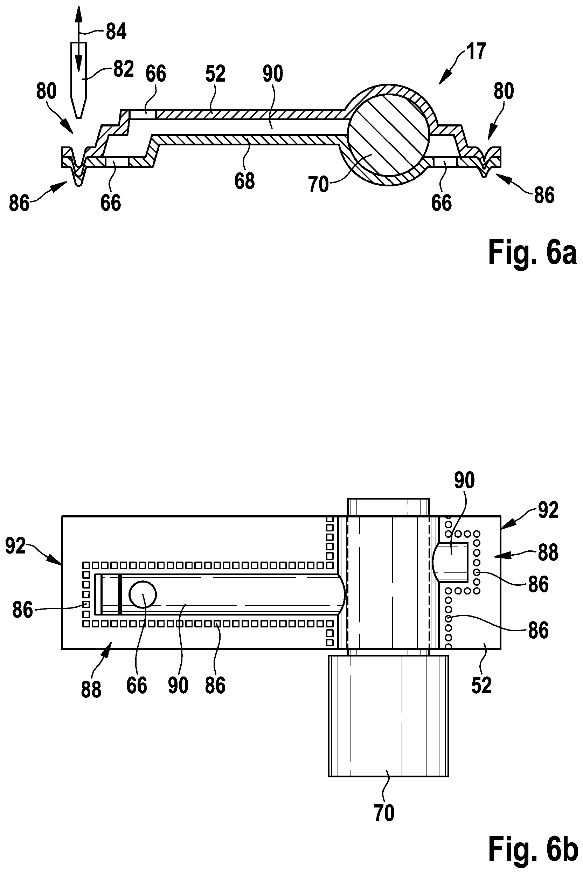

In einem Schritt 5b wird die nach der Figur 3 hergestellte erste Halbschale 52 über der zweiten Halbschale 68 und dem vormontierten Bauelement 70 positioniert und in Richtung des Pfeils 72 montiert. Ein Schritt 5c zeigt den durch die Schritte 5a und 5b erreichten Montage-Zustand der hydraulischen Vorrichtung 17. Zwei in der Figur 5c dargestellte Abschnitte 80 können bei Bedarf für weitere Herstell-Schritte verwendet werden, wie es in der nachfolgenden Figur 6 gezeigt werden wird.

Das vormontierte Bauelement 70 weist in dem in der Figur 5 gezeigten Schema einen runden Querschnitt auf und kann beispielsweise ein in einer Hülse gelagerter Schieber, ein Cartridge-Ventil, ein Wechselventil, eine hydraulische Blende oder ein Ventilmodul 10 sein. Ein Durchmesser 74 des vormontierten Bauelements 70 weist ein Übermaß in Bezug auf eine Ausformung 76 der ersten Halbschale 52 und der zweiten Halbschale 68 auf. Dadurch können eventuelle Leckagen des vormontierten Bauelements 70 zu einer Umgebung 78, und/oder ein am Bauelement 70 tangential vorbei fließendes Fluid, innerhalb der hydraulischen Vorrichtung 17 minimiert werden.

Man erkennt, wie mittels der Schritte 5a bis 5c die Montage der hydraulischen Vorrichtung 17 vergleichsweise einfach und schnell durchgeführt werden kann. Die Montage-Bereiche in den Halbschalen 52 und 68 können dafür gut zugänglich gestaltet werden. Insgesamt baut die fertige hydraulische Vorrichtung 17 relativ kompakt und kann im Vergleich zu einem Aluminium-Guss gegebenenfalls auch Gewicht sparen. Weiterhin kann eine spanende Nacharbeit an der hydraulischen Vorrichtung 17 in der Regel entfallen.

Die Figur 6 zeigt einen weiteren Schritt zur Herstellung der hydraulischen Vorrichtung 17. In der Figur 6a wird ein Stößel 82 in Richtung eines Doppelpfeils 84 bewegt, so dass sich eine Verformung 86 der ersten und der zweiten Halbschale 52 bzw. 68 im Bereich des Abschnitts 80 ausbildet.

Die Figur 6b zeigt eine Draufsicht auf die Darstellung der Figur 6a, wobei die Maßstäbe der Darstellungen in der Figur 6a und 6b teilweise geringfügig voneinander abweichen. Entlang von Dichtabschnitten 88 sind mittels mehrerer aufeinander folgender Herstell-Schritte von Figur 6a eine Vielzahl von Verformungen 86 gebildet worden, welche vorliegend eng beabstandet angeordnet sind.

Die Darstellung des Stößels 82 und der daraus resultierenden Verformungen 86 der ersten und der zweiten Halbschale 52 bzw. 68 ist verallgemeinert und steht stellvertretend für mehrere mögliche Verfahren. Beispielsweise kann das Verfahren der Figur 6a als Stanznieten oder als Durchsetzfügen durchgeführt werden. Für "Durchsetzfügen" werden im technischen Sprachgebrauch teilweise auch die Begriffe "Druckfügen", "Toxen" oder "Clinchen" verwendet.

Man erkennt, wie mittels der dargestellten einfachen Herstell-Schritte die erste Halbschale 52 mit der zweiten Halbschale 68 dauerhaft verbunden werden kann, wobei auch eine Vielzahl möglicher Bauelemente 70 und/oder hydraulischer Baugruppen 42 mit integriert werden können. Mittels der Verformungen 86 wird die Verbindung unlösbar hergestellt und es können - wie vorliegend - Dichtabschnitte 88 gebildet werden. Außerdem können ohne Mehrkosten auch Hydraulikkanäle 90 oder sonstige Hohlräume ("Kavitäten") gebildet werden, welche in der Figur 6 das vormontierte Bauelement 70 mit übrigen und in der Figur 6 nicht gezeigten Bereichen über die Öffnungen 66 verbinden. Randabschnitte 92 der hydraulischen Vorrichtung 17 schließen bündig ab und erfordern keine oder nur eine geringe spanende Nachbearbeitung.

Die in der Figur 6 gezeigte hydraulische Vorrichtung 17 kann ergänzend auch Hinterschnitte für Bohrungen aufweisen. Dies ist in der Figur 6 jedoch nicht gezeigt. Bohrungen als Führung für Steuerkolben übernehmen in Verbindung mit einer oder mehreren Steuerkanten hydraulische Funktionen. Verfahrenstechnisch ist ein minimaler Radius im Bereich der gefügten Halbschalen in Längsrichtung nicht zu umgehen. Dies ist jedoch bei den hohen Anforderungen an Geometrie und Maßhaltigkeit der Bohrung nicht zulässig. Mit einer geringfügigen spanenden Nachbearbeitung am Bohrungsdurchmesser und der Steuerkante können diese Forderungen erreicht werden. Solche Hinterschnitte können beispielsweise radial umlaufende Nuten zur Ölversorgung von Ventilen bilden, und können nach der Verbindung der Halbschalen 52 und 68 spanend mit einer Steuerkante versehen werden. Das anfallende Spanvolumen kann dabei vergleichsweise klein sein. Damit kann die Herstellung der hydraulischen Vorrichtung 17 zusätzlich verbilligt werden.

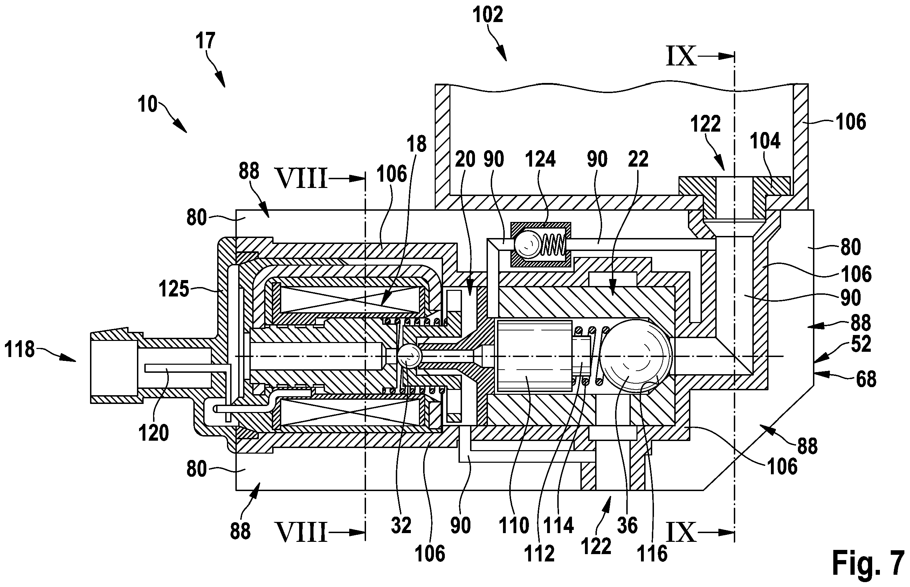

Figur 7 zeigt ein von einem Getriebe-Steuergerät eines Kraftfahrzeugs elektrisch betätigbares hydraulisches Ventilmodul 10 ("Volumenstromsteuerungs-Einrichtung"), welches den Zugang zu einem hydraulischen Speicher 102 steuert. Die Figur 7 stellt also eine hydraulische Vorrichtung 17 dar, wie sie aus dem hydraulischen Speicher 102 und dem daran angeordneten Ventilmodul 10 gebildet wird. Der hydraulische Speicher 102 und das Ventilmodul 10 sind mittels eines Verbindungselementes 104 mechanisch und hydraulisch dauerhaft miteinander verbunden, beispielsweise verpresst.

Das Ventilmodul 10 umfasst eine Anzahl von Gehäuseabschnitten 106, in denen eine Anzahl von Elementen angeordnet sind. Das Ventilmodul 10 umfasst - ähnlich zu dem Ventilmodul 10 der Figur 1 - unter anderem einen Magnetkreis 18, eine Vorsteuerstufe 20 mit einer Ventilkugel 32, sowie eine Hauptstufe 22. Die Hauptstufe 22 umfasst unter anderem ein Führungsstück 110, ein Anschlagstück 112, eine Ventilfeder 114, eine Ventilkugel 36 und einen Ventilsitz 116.

Weiterhin umfasst die hydraulische Vorrichtung 17 einen elektrischen Anschluss 118 mit einem Stecker 120, eine hydraulische Schnittstelle 122 zu dem hydraulischen Speicher 102 (im oberen Bereich der Zeichnung) bzw. eine hydraulische Schnittstelle 122 zu einem nicht dargestellten Getriebe (im unteren Bereich der Zeichnung). Die hydraulische Schnittstelle 122 im unteren Bereich der Zeichnung kann beispielsweise mittels eines Gewindeanschlusses oder eines eingepressten Rohres ausgeführt sein. Dies ist in der Figur 7 jedoch nicht gezeigt. Außerdem umfasst die hydraulische Vorrichtung 17 ein Rückschlagventil 124 mit einer Drossel in einem Bypass-Zweig der Hauptstufe 22, wobei das Rückschlagventil 124 eine Scheibe, eine Feder und eine Ventilkugel umfasst (ohne Bezugszeichen).

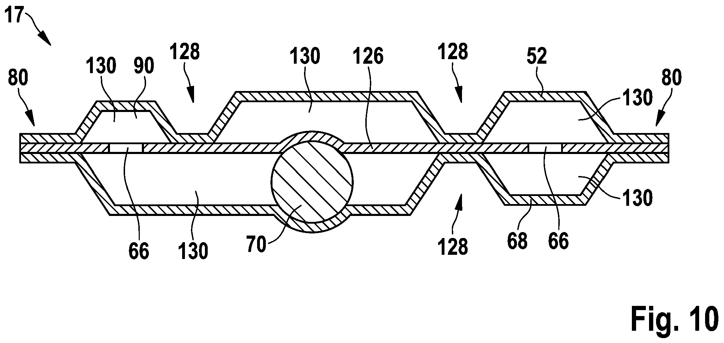

Insbesondere umfasst die hydraulische Vorrichtung 17 eine erste Halbschale 52 und eine zweite Halbschale 68, welche in einem rechten Bereich der Figur 7 durch ihre Bezugszeichen angedeutet sind. Verschiedene Abschnitte der hydraulischen Vorrichtung 17, insbesondere in einem Bereich der Hauptstufe 22, sind mittels Hydraulikkanälen 90 hydraulisch verbunden. Vorliegend ist die hydraulische Vorrichtung 17 ohne die Verwendung einer Zwischenplatte, wie sie in der Figur 10 noch erläutert werden wird, ausgeführt.

Das Ventilmodul 10 ist als ein Servoventil ausgeführt und ermöglicht es, dass ein kontrollierter Austausch von Fluid zwischen dem hydraulischen Speicher 102 und einem Hydraulikkreis des Getriebes ermöglicht wird. Damit kann unter anderem eine so genannte "Start-Stopp-Funktion" eines automatischen Getriebes des Kraftfahrzeugs unterstützt werden.

Die Montage des Ventilmoduls 10 kann vereinfacht werden, wenn vor dem Pressvorgang die in dem Ventilmodul 10 angeordneten Elemente mindestens teilweise vormontiert in die Halbschalen 52 bzw. 68 eingelegt werden. Insbesondere sind der kunststoffumspritzte Magnetkreis 18 zusammen mit einem die Ventilkugel 32 umfassenden Kugelanker in einem einfachen Ventilgehäuse vormontiert.

Verbindungsstücke oder Anschlüsse des Ventilmoduls 10 können während der Montage der beiden Halbschalen 52 und 68 in diese eingepresst werden. Ebenso ist es möglich, solche Verbindungsstücke oder Anschlüsse auch in einem nachfolgenden Verfahrensschritt in die zusammengefügten und dauerhaft verbundenen Halbschalen 52 und 68 einzupressen.

Weiterhin weist das Ventilmodul 10 einen - im linken Bereich der Zeichnung dargestellten - Deckel 125 auf, welcher nach der Montage der ersten und der zweiten Halbschale 52 und 68 auf diese aufgepresst wird. Dabei wird zugleich mittels einer so genannten "Rammkontaktierung" eine elektrische Kontaktierung zwischen dem Stecker 120 und dem Magnetkreis 18 hergestellt. Ebenso ist es möglich, den Magnetkreis 18 oder sonstige eventuellen elektrischen Anschlüsse des Ventilmoduls 10 bzw. der hydraulischen Vorrichtung 17 mittels einer Schneid-Klemm-Verbindung herzustellen.

Man erkennt, wie unter Verwendung der in den Figuren 3 bis 6 gezeigten Verfahrensschritte die hydraulische Vorrichtung 17 mit einer Vielzahl unterschiedlicher Funktionen und Formen hergestellt werden kann. Insbesondere werden dabei auch Abschnitte 80 gebildet, welche mittels - in der Figur 7 nicht dargestellter - Verformungen 86 wenigstens bereichsweise zu Dichtabschnitten 88 ausgebildet sind. Mittels der Verformungen 86 sind die erste Halbschale 52 und die zweite Halbschale 68 auch unlösbar miteinander verbunden. Die Verformungen 86 sind mittels Durchsetzfügen hergestellt. Darüber hinaus ist die hydraulische Vorrichtung 17 zumindest bereichsweise mittels Kaltumformung, Tiefziehen, Stanzen und Stanznieten hergestellt. Dies ist in der Figur 7 jedoch nicht im Detail dargestellt.

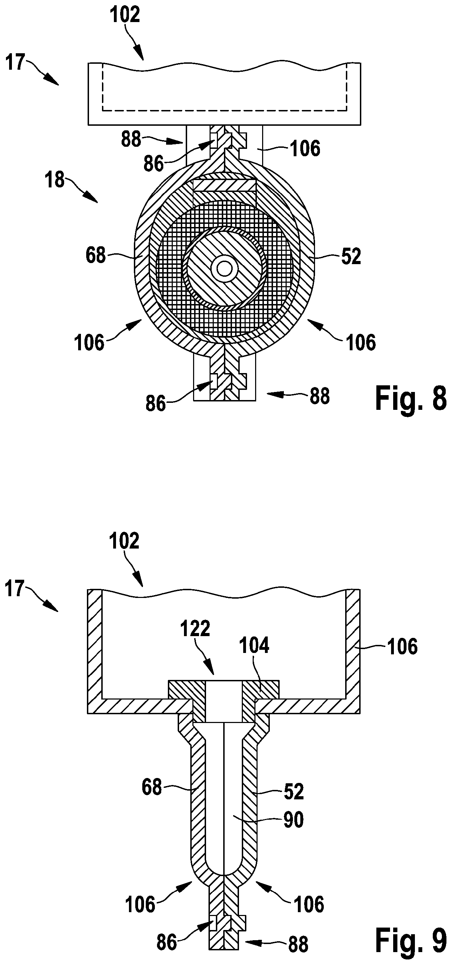

In der Figur 8 bzw. in der Figur 9 wird die hydraulische Vorrichtung 17 in Schnittansichten entlang von Linien VIII-VIII bzw. IX-IX der Figur 7 weiter erläutert. Insbesondere in der Figur 9 ist zu erkennen, dass die hydraulische Vorrichtung 17 besonders platzsparend ausgeführt ist. Die Halbschalen 52 und 68 sind aus Blech-Halbzeugen hergestellt und bauen daher vergleichsweise leicht und klein. Die Verformungen 86 ermöglichen die für den Betrieb der hydraulischen Vorrichtung 17 erforderliche hydraulische Dichtheit. Ergänzend kann die Dichtheit durch eine Klebung und/oder ein Flachdichtmittel - wie beispielsweise eine Folie - unterstützt werden. Dies ist in den Figuren 8 und 9 jedoch nicht dargestellt.

Figur 10 zeigt eine Ausführung der hydraulischen Vorrichtung 17 in einer Schnittansicht, bei der zwischen der ersten und der zweiten Halbschale 52 und 68 eine Zwischenplatte 126 angeordnet ist. Die Zwischenplatte 126 weist Öffnungen 66 auf, um hydraulische Bereiche 130, welche teilweise als Hydraulikkanäle 90 ausgebildet sind, hydraulisch miteinander zu verbinden. Die Festigkeit der hydraulischen Vorrichtung 17 bzw. der Zwischenplatte 126 wird durch Abstützungen 128 erhöht.

Vorliegend ist die Zwischenplatte 126 aus einem gleichen Blech-Halbzeug wie die Halbschalen 52 und 68 hergestellt. An den Abschnitten 80 sind die erste Halbschale 52, die zweite Halbschale 68 und die Zwischenplatte 126 mittels Verformungen 86 unlösbar und nach außen hydraulisch dicht verbunden. Die Verformungen 86 werden auch verwendet, um die Abstützungen 128 an der Zwischenplatte 126 zu befestigen. Die Verformungen 86 sind in der Figur 10 jedoch nicht mit dargestellt.

Die Montage der hydraulischen Vorrichtung 17 nach der Figur 10 kann gegebenenfalls in einem einzigen Schritt erfolgen. Ebenso ist es möglich, zuerst die erste Halbschale 52 und die Zwischenplatte 126 miteinander zu verbinden, und danach in einem weiteren Schritt die zweite Halbschale 68 anzubringen.

## Patentansprüche

1. Verfahren zum Herstellen einer hydraulischen Vorrichtung (17), bei dem mindestens ein Hydraulikkanal (90) und mindestens ein Anschluss (122) hergestellt und/oder miteinander hydraulisch verbunden werden, wobei die hydraulische Vorrichtung (17) aus mindestens zwei Blechen (54) hergestellt wird, wobei die Bleche (54) mittels der Prozesse Kaltumformen, Tiefziehen, Stanzen, Stanznieten, und/oder Durchsetzfügen geformt und miteinander verbunden werden, wobei die Bleche (54) unter Verwendung von mindestens einem Zwischenblech (126) miteinander verbunden werden, **dadurch gekennzeichnet, dass** es den Schritt umfasst: Verbinden der beiden Bleche (54) und gleichzeitiges Herstellen von mindestens bereichsweisen hydraulischen Dichtabschnitten (88) mittels Stanznieten und/oder Durchsetzfügen.

2. Verfahren nach Anspruch 1, **dadurch gekennzeichnet, dass** die hydraulische Vorrichtung (17) ein Hydraulikmodul (12) eines Getriebes ist.

3. Verfahren nach Anspruch 1, **dadurch gekennzeichnet, dass** die hydraulische Vorrichtung (17) ein Ventilmodul (10), insbesondere zum Füllen und Entleeren eines Hydraulikspeichers (102) ist.

4. Verfahren nach wenigstens einem der vorhergehenden Ansprüche, **dadurch gekennzeichnet, dass** mindestens zwei der Prozesse im selben Arbeitsgang durchgeführt werden, insbesondere Stanzen, Stanznieten und ein Umformvorgang.

5. Verfahren nach einem der vorhergehenden Ansprüche, **dadurch gekennzeichnet, dass** das Zwischenblech (126) oder die Zwischenplatte durch Kaltumformen, Tiefziehen, Stanzen, Stanznieten, und/oder Durchsetzfügen geformt wird.

6. Verfahren nach wenigstens einem der vorhergehenden Ansprüche, **dadurch gekennzeichnet, dass** mindestens ein Bauelement (70) und/oder mindestens eine hydraulische Baugruppe (42) in die hydraulische Vorrichtung (17) vor dem Umformen-integriert wird.

7. Verfahren nach wenigstens einem der vorhergehenden Ansprüche, **dadurch gekennzeichnet, dass** es mindestens einen der folgenden Schritte umfasst:
- Umformen eines ersten Blechs (54) zu einer Halbschale (52);
- Umformen eines zweiten Blechs (54) zu einer Halbschale (68);
- Einlegen mindestens eines Bauelements (70) und/oder mindestens einer hydraulischen Baugruppe (42) in mindestens eine der Halbschalen (52; 68);
- Einlegen des mindestens einen Zwischenblechs (126) bzw. der mindestens einen Zwischenplatte;
- Verbinden der beiden Halbschalen (52; 68) und gleichzeitiges Herstellen von mindestens bereichsweisen hydraulischen Dichtabschnitten (88) mittels Löten, Schweißen und/oder Kleben zusätzlich zum Stanznieten und/oder Durchsetzfügen.

8. Verfahren nach Anspruch 6 oder 7, **dadurch gekennzeichnet, dass** das eingelegte Bauelement (70) und/oder die eingelegte hydraulische Baugruppe (42) ein Übermaß in Bezug auf eine Ausformung (76) der Halbschalen (52; 68) aufweist.

9. Verfahren nach wenigstens einem der vorstehenden Ansprüche, **dadurch gekennzeichnet, dass** die Bleche (54) als "Coil" ausgeführte Halbzeuge sind.

10. Hydraulikmodul (12) für die hydraulische Steuerung eines Getriebes, **dadurch gekennzeichnet, dass** es mittels eines Verfahrens nach einem der Ansprüche 1 bis 9 hergestellt ist.

11. Ventilmodul (10) zum Füllen und Entleeren eines Hydraulikspeichers (102), **dadurch gekennzeichnet, dass** es mittels eines Verfahrens nach einem der Ansprüche 1 bis 9 hergestellt ist.

## Claims

1. Method for producing a hydraulic device (17), in which method at least one hydraulic channel (90) and at least one port (122) are produced and/or hydraulically connected to one another, wherein the hydraulic device (17) is produced from at least two metal sheets (54), wherein the metal sheets (54) are shaped and connected to one another by means of the processes of cold working, deep drawing, punching, punch riveting and/or clinching, wherein the metal sheets (54) are connected to one another using at least one intermediate metal sheet (126), **characterized in that** said method comprises the step: connecting the two metal sheets (54) and simultaneously producing at least regional hydraulic sealing portions (88) by means of punch riveting and/or clinching.

2. Method according to Claim 1, **characterized in that** the hydraulic device (17) is a hydraulic module (12) of a transmission.

3. Method according to Claim 1, **characterized in that** the hydraulic device (17) is a valve module (10), in particular for the filling and evacuation of a hydraulic accumulator (102).

4. Method according to at least one of the preceding claims, **characterized in that** at least two of the processes are performed in the same working step, in particular punching, punch riveting and a deformation process.

5. Method according to any of the preceding claims, **characterized in that** the intermediate metal sheet (126) or the intermediate plate is shaped by cold working, deep drawing, punching, punch riveting and/or clinching.

6. Method according to at least one of the preceding claims, **characterized in that** at least one component (70) and/or at least one hydraulic assembly (42) is integrated into the hydraulic device (17) prior to the deformation.

7. Method according to at least one of the preceding claims, **characterized in that** said method comprises at least one of the following steps:
- deforming a first metal sheet (54) to form a half-shell (52);
- deforming a second metal sheet (54) to form a half-shell (68);
- placing at least one component (70) and/or at least one hydraulic assembly (42) into at least one of the half-shells (52; 68);
- placing in the at least one intermediate metal sheet (126) or the at least one intermediate plate;
- connecting the two half-shells (52; 68) and simultaneously producing at least regional hydraulic sealing portions (88) by means of brazing, welding and/or adhesive bonding in addition to the punch riveting and/or clinching.

8. Method according to Claim 6 or 7, **characterized in that** the placed-in component (70) and/or the placed-in hydraulic assembly (42) has an oversize in relation to a shaped protuberance (76) of the half-shells (52; 68).

9. Method according to at least one of the preceding claims, **characterized in that** the metal sheets (54) are semifinished parts in coil form.

10. Hydraulic module (12) for the hydraulic control of a transmission, **characterized in that** said hydraulic module is produced by means of a method according to any of Claims 1 to 9.

11. Valve module (10) for the filling and evacuation of a hydraulic accumulator (102), **characterized in that** said valve module is produced by means of a method according to any of Claims 1 to 9.

## Revendications

1. Procédé de fabrication d'un dispositif hydraulique (17), selon lequel au moins un conduit hydraulique (90) et au moins un raccord (122) sont fabriqués et/ou reliés hydrauliquement les uns aux autres, le dispositif hydraulique (17) étant fabriqué à partir d'au moins deux tôles (54), les tôles (54) étant façonnées et reliées les unes aux autres au moyen des processus de formage à froid, d'emboutissage profond, d'estampage, de rivetage par estampage et/ou de clinchage, les tôles (54) étant reliées les unes aux autres en utilisant au moins une tôle intermédiaire (126), **caractérisé en ce qu'**il comprend l'étape consistant à : relier les deux tôles (54) et en même temps fabriquer des parties d'étanchéité (88) hydrauliques au moins dans certaines régions par rivetage par estampage et/ou clinchage.

2. Procédé selon la revendication 1, **caractérisé en ce que** le dispositif hydraulique (17) est un module hydraulique (12) d'une transmission.

3. Procédé selon la revendication 1, **caractérisé en ce que** le dispositif hydraulique (17) est un module soupape (10), en particulier servant à remplir et à vider un accumulateur hydraulique (102).

4. Procédé selon au moins l'une quelconque des revendications précédentes, **caractérisé en ce qu'**au moins deux des processus sont effectués pendant la même étape de travail, en particulier l'estampage, le rivetage par estampage et une opération de déformation.

5. Procédé selon l'une quelconque des revendications précédentes, **caractérisé en ce que** la tôle intermédiaire (126) ou la plaque intermédiaire est formée par formage à froid, emboutissage profond, estampage, rivetage par estampage et/ou clinchage.

6. Procédé selon au moins l'une quelconque des revendications précédentes, **caractérisé en ce qu'**au moins un composant (70) et/ou au moins un ensemble hydraulique (42) sont intégrés dans le dispositif hydraulique (17) avant la déformation.

7. Procédé selon au moins l'une quelconque des revendications précédentes, **caractérisé en ce qu'**il comporte au moins l'une des étapes suivantes consistant à :
- déformer une première tôle (54) pour obtenir une demi-coque (52) ;
- déformer une deuxième tôle (54) pour obtenir une demi-coque (68) ;
- insérer au moins un composant (70) et/ou au moins un ensemble hydraulique (42) dans au moins l'une des demi-coques (52 ; 68) ;
- insérer ladite au moins une tôle intermédiaire (126) ou ladite au moins une plaque intermédiaire ;
- relier les deux demi-coques (52 ; 68) et en même temps fabriquer des parties d'étanchéité (88) hydrauliques au moins dans certaines régions par brasage, soudage et/ou collage en plus du rivetage par estampage et/ou du clinchage.

8. Procédé selon la revendication 6 ou 7, **caractérisé en ce que** le composant inséré (70) et/ou l'ensemble hydraulique inséré (42) présentent une surmesure par rapport à une partie saillante (76) des demi-coques (52 ; 68).

9. Procédé selon au moins l'une quelconque des revendications précédentes, **caractérisé en ce que** les tôles (54) sont des produits semi-finis réalisés sous forme de bobine (« Coil »).

10. Module hydraulique (12) pour la commande hydraulique d'une transmission, **caractérisé en ce qu'**il est fabriqué au moyen d'un procédé selon l'une quelconque des revendications 1 à 9.

11. Module soupape (10) servant à remplir et à vider un accumulateur hydraulique (102), **caractérisé en ce qu'**il est fabriqué au moyen d'un procédé selon l'une quelconque des revendications 1 à 9.
